# EUROPEAN PATENT APPLICATION

(11) **EP 3 901 766 A1**
(43) Date of publication of application: **27.10.2021**
(21) Application number: 19911587.4
(22) Date of filing: 24.12.2019
(51) Int. Cl.: G06F 8/71

(54) **OFFLINE CONFIGURATION METHOD AND APPARATUS FOR SMART DEVICE**

(30) Priority: 24.01.2019 CN 201910070157
(71) Applicant: Opple Lighting Co., Ltd., Shanghai 201201 (CN)
(72) Inventor: HE, Chong, Suzhou, Jiangsu 215211 (CN)
(74) Representative: dompatent von Kreisler Selting Werner - Partnerschaft von Patent- und Rechtsanwälten mbB
(86) International application number: PCT/CN2019/128020
(87) International publication number: WO 2020/151447

(57) **Abstract**

The present disclosure provides an offline configuring method and apparatus for an intelligent device. The method includes: adding a virtual device corresponding to a to-be-configured device to a target account, configuring a parameter to the virtual device and storing the parameter in a preset database; adding the to-be-configured device to the target account after the to-be-configured device is online, and binding the to-be-configured device added to the target account with the corresponding virtual device; and reading the parameter of the virtual device bound with the to-be-configured device from the preset database, sending the read parameter to the to-be-configured device, and implementing parameter configuration to the to-be-configured device by utilizing the parameter. According to embodiments of the present disclosure, by completing the parameter configuration work in advance when the to-be-configured device is offline, after the to-be-configured device is online, the configured parameter stored previously can be directly used, thereby not only reserving sufficient parameter error-correcting time for the to-be-configured device, but also effectively avoiding a problem that the configuration work cannot be successfully completed due to various reasons (e.g., a network problem or a device fault).

## Description

### TECHNICAL FIELD

The present disclosure relates to the technical field of intelligent control, and particularly to an offline configuring method and apparatus for an intelligent device.

### BACKGROUND

In the prior art, when an intelligent device is installed, a series of configurations often need to be carried out on the intelligent device. Currently, a conventional method adopted is that debugging and installation are directly carried out on site, a network is configured to the device and is added to a user's account, and then other configurations are carried out, i.e., the device can only be configured in an online (networked) state, but cannot be configured offline.

However, for a project with many intelligent device nodes, it is very complex to configure on site (one node may have dozens of configuration parameters), and it is very prone to errors. In addition, the configuration work per se is relatively complex and time-consuming, and the device cannot be timely added to the user's account possibly due to various reasons (e.g., a network problem, a device fault or the like), and thus it is liable to result in that the configuration work cannot be successfully completed, and then the progress of the project implementation is influenced.

### SUMMARY

In view of the problem above, the present disclosure is proposed to provide an offline configuring method and apparatus for an intelligent device, which solves or at least partially solves the problem above.

According to one aspect of the present disclosure, an offline configuring method for an intelligent device is provided, the method comprises:
adding a virtual device corresponding to a to-be-configured device to a target account, and configuring a parameter to the virtual device and storing the parameter in a preset database;
adding the to-be-configured device to the target account after the to-be-configured device is online, and binding the to-be-configured device added to the target account with the corresponding virtual device; and
reading the parameter of the virtual device bound with the to-be-configured device from the preset database, sending the read parameter to the to-be-configured device, and implementing parameter configuration to the to-be-configured device by utilizing the parameter.

Optionally, adding the virtual device corresponding to the to-be-configured device to the target account, and configuring the parameter to the virtual device and storing the parameter in the preset database comprises:
receiving a login request for the target account, and executing a login operation of the target account;
allocating a unique virtual ID to the virtual device corresponding to the to-be-configured device, and adding the virtual ID of the virtual device to the target account which is logged in; and
configuring the parameter to the virtual device, and correspondingly storing a configured parameter and the virtual ID of the virtual device in the preset database.

Optionally, the parameter configured to the virtual device at least comprises one of:
an IP address, a device subordinate group, a working rule, a working scene and device operation data.

Optionally, adding the to-be-configured device to the target account after the to-be-configured device is online comprises:
allocating a unique identification to the to-be-configured device after the to-be-configured device is online; and
adding the unique identification allocated to the to-be-configured device to the target account.

Optionally, binding the to-be-configured device added to the target account with the corresponding virtual device comprises:
acquiring the unique identification of the to-be-configured device, and establishing a one-to-one corresponding mapping relationship between the unique identification of the to-be-configured device and the virtual ID of the corresponding virtual device in the target account; and
storing the established mapping relationship between the unique identification and the virtual ID in the preset database.

Optionally, the unique identification of the to-be-configured device comprises: an MAC address or a unique ID of the to-be-configured device.

Optionally, reading the parameter of the virtual device bound with the to-be-configured device from the preset database, sending the read parameter to the to-be-configured device and implementing parameter configuration for the to-be-configured device by utilizing the parameter comprises:
detecting whether the parameter of the virtual device bound with the to-be-configured device exists in the preset database; and
if yes, reading the parameter of the virtual device bound with the to-be-configured device, sending the read parameter to the to-be-configured device, and implementing parameter configuration to the to-be-configured device by utilizing the parameter.

According to another aspect of the present disclosure, an offline configuring apparatus for an intelligent device is further provided, the apparatus comprises:
a configuring module, configured to add a virtual device corresponding to a to-be-configured device to a target account, and configure a parameter to the virtual device and store the parameter in a preset database;
a binding module, configured to add the to-be-configured device to the target account after the to-be-configured device is online, and bind the to-be-configured device added to the target account with the corresponding virtual device; and
a sending module, configured to read the parameter of the virtual device bound with the to-be-configured device from the preset database, send the read parameter to the to-be-configured device, and implement parameter configuration to the to-be-configured device by utilizing the parameter.

Optionally, the configuring module further comprises:
a receiving unit, configured to receive a login request for the target account, and execute a login operation of the target account;
an adding unit, configured to allocate a unique virtual ID to the virtual device corresponding to the to-be-configured device, and add the virtual ID of the virtual device to the target account which is logged in; and
a storing unit, configured to configure the parameter to the virtual device, and correspondingly store the configured parameter and the virtual ID of the virtual device in the preset database.

Optionally, the parameter configured to the virtual device at least comprises one of:
an IP address, a device subordinate group, a working rule, a working scene and device operation data.

Optionally, the binding module is further configured to:
allocate a unique identification to the to-be-configured device after the to-be-configured device is online; and

add the unique identification allocated to the to-be-configured device to the target account.

Optionally, the binding module is further configured to:
acquire the unique identification of the to-be-configured device, and establish a one-to-one corresponding mapping relationship between the unique identification of the to-be-configured device and the virtual ID of the corresponding virtual device in the target account; and
store the established mapping relationship between the unique identification and the virtual ID in the preset database.

Optionally, the unique identification of the to-be-configured device comprises: an MAC address or a unique ID of the to-be-configured device.

Optionally, the sending module is further configured to:
detect whether the parameter of the virtual device bound with the to-be-configured device exists in the preset database; and
if yes, read the parameter of the virtual device bound with the to-be-configured device, send the read parameter to the to-be-configured device, and implement parameter configuration to the to-be-configured device by utilizing the parameter.

In embodiments of the present disclosure, by adding a virtual device corresponding to a to-be-configured device to a target account, configuring a parameter to the virtual device and storing the parameter in a preset database, i.e., configuring the parameter to the to-be-configured device when the to-be-configured device is in an offline state, after the to-be-configured device is online (i.e., networked), the to-be-configured device can be added to the target account, and the to-be-configured device is bound with the corresponding virtual device in the target account, so that the offline configured parameter stored in the preset database can be sent to the to-be-configured device to carry out parameter configuration on the to-be-configured device by directly utilizing the sent parameter. Therefore, according to the embodiments of the present disclosure, by configuring all node (to-be-configured device) parameters before project field implementation, i.e., completing the parameter configuration work in advance when the to-be-configured device is offline, after the to-be-configured device is online, the configured parameter stored previously can be directly used, thereby not only reserving sufficient parameter error-correcting time for the to-be-configured device, but also effectively avoiding a problem that the configuration work cannot be successfully completed due to various reasons (e.g., a network problem or a device fault). Further, efficiency of installing and configuring the to-be-configured device and user experience are also greatly improved.

The illustration above is merely the overview of the technical solutions of the present disclosure, in order to understand the technical means of the present disclosure more clearly, implementation can be carried out according to the content of the specification, and in order to enable the above-mentioned and other objects, characteristics and advantages of the present disclosure to be more apparent and easy to understand, the specific embodiments of the present disclosure will be particularly illustrated below.

According to the detailed descriptions below on the specific embodiments of the present disclosure in connection with the drawings, those skilled in the art will understand the above-mentioned and other objects, advantages and characteristics of the present disclosure more clearly.

### BRIEF DESCRIPTION OF THE DRAWINGS

Various other advantages and benefits will become clear for those ordinary skilled in the art by reading the detailed descriptions of the preferred embodiments below. The accompanying drawings are merely used for indicating the preferred embodiments, but should not be regarded as limitation to the present disclosure. In addition, in the overall accompanying drawings, the same reference signs represent the same parts. In the accompanying drawings:
FIG. 1 shows a flow schematic diagram of an offline configuring method for an intelligent device according to an embodiment of the present disclosure;
FIG. 2 shows a structural schematic diagram of an offline configuring apparatus for an intelligent device according to an embodiment of the present disclosure; and
FIG. 3 shows a structural schematic diagram of an offline configuring apparatus for an intelligent device according to another embodiment of the present disclosure.

### DETAILED DESCRIPTION

Exemplary embodiments of the present disclosure will be described in more detail below with reference to the accompanying drawings. Although the exemplary embodiments of the present disclosure are shown in the accompanying drawings, it should be understood that the present disclosure can be implemented in various forms and should not be limited to the embodiments described herein. On the contrary, providing those embodiments is to understand the present disclosure more thoroughly, and the scope of the present disclosure can be completely communicated to those skilled in the art.

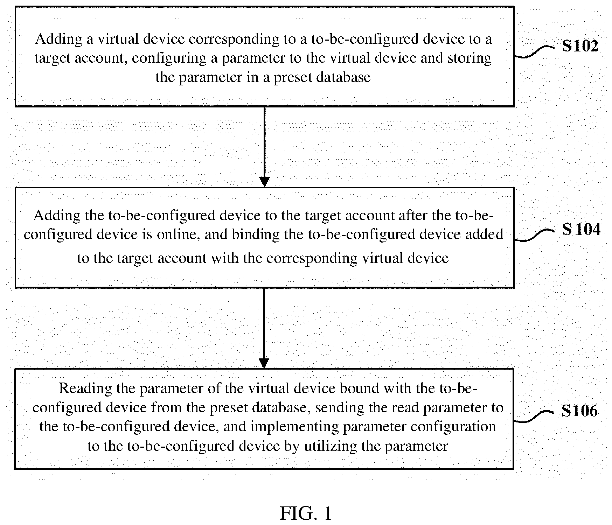

In order to solve the technical problem above, embodiments of the present disclosure provide an offline configuring method for an intelligent device, which can be applied to an intelligent device, such as intelligent lamps, intelligent furniture, intellectual electric apparatus and the like, in the intelligent control Internet of Things (IoT). FIG. 1 shows a flow schematic diagram of an offline configuring method for an intelligent device according to an embodiment of the present disclosure. With reference to FIG. 1, the method at least includes steps S102 to S106.

In the step S102, adding a virtual device corresponding to a to-be-configured device to a target account, configuring a parameter to the virtual device and storing the parameter in a preset database.

In the step S104, adding the to-be-configured device to the target account after the to-be-configured device is online, and binding the to-be-configured device added to the target account with the corresponding virtual device.

In the step S106, reading the parameter of the virtual device bound with the to-be-configured device from the preset database, sending the read parameter to the to-be-configured device, and implementing parameter configuration to the to-be-configured device by utilizing the parameter.

According to the embodiments of the present disclosure, by configuring all node (to-be-configured device) parameters before project field implementation, i.e., completing the parameter configuration work in advance when the to-be-configured device is offline, after the to-be-configured device is online, the configured parameter stored previously can be directly used, thereby not only reserving sufficient parameter error-correcting time for the to-be-configured device, but also effectively avoiding a problem that the configuration work cannot be successfully completed due to various reasons (e.g., a network problem or a device fault). Further, efficiency of installing and configuring the to-be-configured device and user experience are also greatly improved.

Referring to the step S102 above, in an embodiment of the present disclosure, in order to facilitate carrying out offline parameter configuration on the to-be-configured device, parameter configuration needs to be firstly carried out by taking the virtual device corresponding to the to-be-configured device as a to-be-configured object, and according to the embodiment of the present disclosure, a plurality of virtual devices corresponding to the to-be-configured device are prearranged. After a login request for the target account is received, a login operation of the target account is executed. Then, the virtual device corresponding to the to-be-configured device is acquired, a unique virtual ID (Identity) is allocated to the acquired virtual device corresponding to the to-be-configured device, and the virtual ID of the virtual device is added to the target account which is logged in. Then, the parameter is configured to the virtual device in the target account, and the configured parameter and the virtual ID of the virtual device are correspondingly stored in the preset database.

In the embodiment of the present disclosure, one virtual ID corresponds to one virtual device, and one virtual device also corresponds to one real intelligent device (i.e., the to-be-configured device), and for example, N intelligent devices are to be installed in one room, and then N virtual devices are established in advance to form one-to-one correspondence between the N virtual devices and the N intelligent devices.

In this embodiment, the correspondence between the devices may include position information correspondence, device type correspondence, device function correspondence and the like between the virtual device and the real device. Therefore, when the virtual ID of the virtual device is added to the target account which is logged in, basic information of the virtual device, such as position information, the type, the function and the like, also can be input.

In one embodiment of the present disclosure, the parameters configured to the virtual device may include parameters of the real intelligent device corresponding to the virtual device, such as an IP address, a device subordinate group, a working rule, a working scene, device operation data and the like, in which the device subordinate group refers to a case that when a plurality of groups of intelligent devices need to be installed, the intelligent devices can be grouped or clustered; the working rule includes execution logic parameters and the like of the intelligent device in the working process; and the working scene includes an environment scene in which the intelligent device is to be installed, e.g., a conference room scene, an office scene, a leisure and entertainment scene and the like.

Because the configured parameters cannot be directly stored to a real device terminal, according to the embodiment of the present disclosure, those configured parameters can be firstly stored in the database, so that parameter configuration does not need to be carried out only when installation and adding of all the real devices are completed, thereby not only benefiting for reducing the later error probability, but also improving the working efficiency of parameter configuration.

Referring to the step S104 above, in an embodiment of the present disclosure, after the to-be-configured device is online, i.e., after the to-be-configured device is installed and a network is configured to the to-be-configured device, the to-be-configured device can be added to the target account. When the to-be-configured device is added to the target account, a unique identification also may be firstly allocated to the to-be-configured device, and then the unique identification allocated to the to-be-configured device is added to the target account.

In the embodiments of the present disclosure, when the to-be-configured device and the corresponding virtual device are bound in the target account, the executed binding process specifically is that: firstly, acquiring the unique identification of the to-be-configured device, then establishing a one-to-one corresponding mapping relationship between the unique identification of the to-be-configured device and the virtual ID of the corresponding virtual device in the target account, and finally, storing the established mapping relationship between the unique identification and the virtual ID in the preset database.

The unique identification of the to-be-configured device may include an MAC (Media Access Control) address, or may include a unique ID number of the to-be-configured device.

Referring to the step S106 above, in an embodiment of the present disclosure, after the to-be-configured device added to the target account is bound with the corresponding virtual device, parameter configuration on the real to-be-configured device can be implemented by sending the offline configured parameter to the to-be-configured device.

In order to ensure that the configured parameter of the to-be-configured device is really stored in the preset database to avoid a problem that the configuration parameter is not successfully stored in the preset database, resulting in that parameter configuration cannot be carried out on the to-be-configured device, it may also be detected whether the parameter of the virtual device bound with the to-be-configured device exists in the preset database first, if it is detected that the parameter of the virtual device bound with the to-be-configured device exists in the preset database, i.e., it is determined that the virtual device has been configured offline before, the parameter of the virtual device bound with the to-be-configured device is read from the preset database, the read parameter is sent to the to-be-configured device, and then parameter configuration to the to-be-configured device is implemented by utilizing the parameter.

In order to present the offline configuring process of the intelligent device according to the present disclosure more clearly, illustration is carried out by a specific embodiment. In this embodiment, assuming that there are N to-be-configured devices (i.e., real intelligent devices) which are to be installed, correspondingly, N virtual devices corresponding to the N to-be-configured devices will be established in advance.

In a first step, unique virtual IDs are respectively allocated to the N virtual devices, and the virtual ID of each virtual device is added to the target account which is logged in.

In a second step, parameters are configured to the virtual devices in the target account, and the configured parameters and the virtual IDs of the virtual devices are correspondingly stored in the preset database.

Certain, when this step is executed, the basic information of the virtual devices, such as position information, type information, function information and the like, may also be simultaneously added to the target account according to the corresponding relationships between the virtual devices and the to-be-configured devices.

In a third step, after the to-be-configured devices are installed in an actual installing scene and the network is allocated to the to-be-configured devices, unique identifications are allocated to the to-be-configured devices, and are added to the target account.

Certainly, in this step, the unique identifications may also be allocated to the to-be-configured devices before the to-be-configured devices are installed, and the sequence of allocating the unique identifications to the to-be-configured devices is not limited herein.

In a fourth step, the unique identification of any one to-be-configured device is selected from the target account, and the one-to-one corresponding mapping relationship between the unique identification of the selected to-be-configured device and the virtual ID of the corresponding virtual device is established and stored so as to implement binding the to-be-configured device with the corresponding virtual device.

In this step, if network allocation is completed for all of the N to-be-configured devices, the N to-be-configured devices and the N corresponding virtual devices can be respectively bound.

In a fifth step, after the unique identification of the to-be-configured device which needs to be subjected to parameter configuration is selected from the target account, the virtual device bound with the to-be-configured device is determined, the parameter previously configured to the corresponding virtual device is read from the preset database, and the read parameter is sent to the to-be-configured device so as to implement parameter configuration on the to-be-configured device by utilizing the sent parameter.

Therefore, technical personnel taking charge of installing the real device in field only needs to take charge of adding the real device and binding the real device with the virtual device in the target account, so that the working process of field configuration is greatly simplified, and the working efficiency is improved.

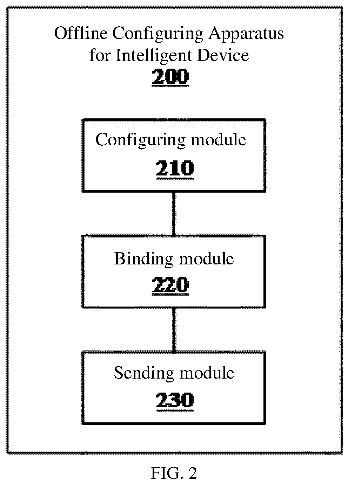

Based on the same inventive concept, embodiments of the present disclosure further provide an offline configuring apparatus for an intelligent device. FIG. 2 shows a structural schematic diagram of an offline configuring apparatus for an intelligent device according to an embodiment of the present disclosure. With reference to FIG. 2, the offline configuring apparatus 200 for the intelligent device includes a configuring module 210, a binding module 220 and a sending module 230.

Functions of each component or device and a connection relationship between each part of the offline configuring apparatus for the intelligent device according to the embodiment of the present disclosure will be illustrated:

The configuring module 210 is configured to add a virtual device corresponding to a to-be-configured device to a target account, and configure a parameter to the virtual device and store the parameter in a preset database.

The binding module 220 is coupled with the configuring module 210, and is configured to add the to-be-configured device to the target account after the to-be-configured device is online, and bind the to-be-configured device added to the target account with the corresponding virtual device.

The sending module 230 is coupled with the binding module 220, and is configured to read the parameter of the virtual device bound with the to-be-configured device from the preset database, send the read parameter to the to-be-configured device, and implement parameter configuration to the to-be-configured device by utilizing the parameter.

In an embodiment of the present disclosure, the parameter configured to the virtual device at least comprises one of an IP address, a device subordinate group, a working rule, a working scene, device operation data and the like.

In an embodiment of the present disclosure, the sending module 230 is further configured to: detect whether the parameter of the virtual device bound with the to-be-configured device exists in the preset database; and if yes, read the parameter of the virtual device bound with the to-be-configured device, send the read parameter to the to-be-configured device, and implement parameter configuration to the to-be-configured device by utilizing the parameter.

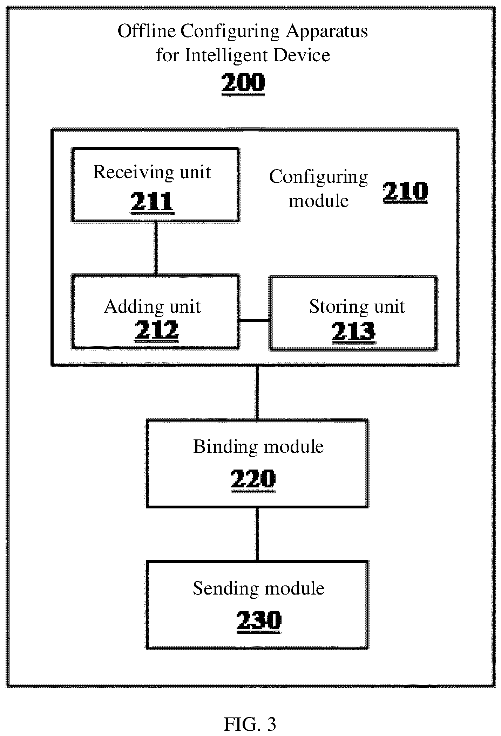

Embodiments of the present disclosure further provide another offline configuring apparatus for an intelligent device. FIG. 3 shows a structural schematic diagram of an offline configuring apparatus for an intelligent device according to an embodiment of the present disclosure. With reference to FIG. 3, the offline configuring apparatus 200 for the intelligent device includes a configuring module 210, a binding module 220 and a sending module 230, and moreover, the configuring module 210 further includes a receiving unit 211, an adding unit 212 and a storing unit 213.

The specific illustration about the configuring module 210, the binding module 220 and the sending module 230 can refer to the embodiment above.

The receiving unit 211 is configured to receive a login request for the target account, and execute a login operation of the target account.

The adding unit 212 is coupled with the receiving unit 211, and is configured to allocate a unique virtual ID to the virtual device corresponding to the to-be-configured device, and add the virtual ID of the virtual device to the target account which is logged in.

The storing unit 213 is coupled with the adding unit 212, and is configured to configure the parameter to the virtual device, and correspondingly store the configured parameter and the virtual ID of the virtual device in the preset database.

In an embodiment of the present disclosure, the binding module 220 is further configured to: allocate a unique identification to the to-be-configured device after the to-be-configured device is online; and add the unique identification allocated to the to-be-configured device to the target account.

In an embodiment of the present disclosure, the binding module 220 is further configured to: acquire the unique identification of the to-be-configured device, and establish a one-to-one corresponding mapping relationship between the unique identification of the to-be-configured device and the virtual ID of the corresponding virtual device in the target account; and store the established mapping relationship between the unique identification and the virtual ID in the preset database.

In an embodiment of the present disclosure, the unique identification of the to-be-configured device includes an MAC address or a unique ID of the to-be-configured device.

According to any one of the alternative embodiments above or a combination of a plurality of alternative embodiments, the embodiments of the present disclosure can achieve beneficial effects below:

In the embodiments of the present disclosure, by adding the virtual device corresponding to the to-be-configured device to the target account, configuring the parameter to the virtual device and storing the parameter in the preset database, i.e., configuring the parameter to the to-be-configured device when the to-be-configured device is in an offline state, after the to-be-configured device is online (i.e., networked), the to-be-configured device can be added to the target account, and the to-be-configured device is bound with the corresponding virtual device in the target account, so that the offline configured parameter stored in the preset database can be sent to the to-be-configured device to carry out parameter configuration on the to-be-configured device by directly utilizing the sent parameter. Therefore, according to the embodiments of the present disclosure, by configuring all node (to-be-configured device) parameters before project field implementation, i.e., completing the parameter configuration work in advance when the to-be-configured device is offline, after the to-be-configured device is online, the configured parameter stored previously can be directly used, thereby not only reserving sufficient parameter error-correcting time for the to-be-configured device, but also effectively avoiding a problem that the configuration work cannot be successfully completed due to various reasons (e.g., a network problem or a device fault). Further, efficiency of installing and configuring the to-be-configured device and user experience are also greatly improved.

Those skilled in the art can clear know that for the specific working processes of the above-described system, apparatus and unit, the corresponding processes in the above-mentioned method embodiments can be referred to, which will not be repeated herein for brevity.

In addition, each function unit in each embodiment of the present disclosure may be physically independent of each other, or two or more function units may be integrated together, or all the function units may be integrated into one processing unit. The integrated function unit not only can be implemented in a hardware form, but also can be implemented in a software or firmware form.

Those ordinary skilled in the art should understand that: if the integrated function unit is implemented in the software form and is sold or used as an independent product, the integrated function unit can be stored in a computer readable storage medium. Based on such understanding, the technical solutions of the present disclosure in essence or all or part of the technical solutions can be embodied in a form of a software product, the computer software product is stored in a storage medium and includes a plurality of instructions for enabling a computing device (e.g., a personal computer, a server, or a network device and the like) to execute all or part of the steps in the method according to each embodiment of the present disclosure when operating the instructions. The above-mentioned storage medium includes various mediums capable of storing program codes, such as a USB flash disk, a mobile hard disk, a Read Only Memory (ROM), a Random Access Memory (RAM), a magnetic disk or an optical disc and the like.

Or, implementation of all or part of the steps in the above-mentioned method embodiments can be completed by hardware (the computing device such as the personal computer, the server or the network device and the like) related to program instructions, and the program instructions can be stored in a computer readable storage medium, and when the program instructions are executed by a processor of the computing device, the computing device executes all or part of the steps in the method according to each embodiment of the present disclosure.

Finally, it should be illustrated that each embodiment above is merely used for illustrating the technical solutions of the present disclosure, but not intended to limit it. Although the present disclosure is illustrated in detail with reference to each above-mentioned embodiment, those ordinary skilled in the art should understand that: within the spirit and the principle of the present disclosure, those ordinary skilled in the art can still make modifications to the technical solutions recorded in each above-mentioned embodiment, or make equivalent replacements to part or all of the technical features in the technical solutions; and those modifications or replacements cannot enable the corresponding technical solutions to be departed from the protection scope of the present disclosure.

## Claims

1. An offline configuring method for an intelligent device, comprising:
adding a virtual device corresponding to a to-be-configured device to a target account, configuring a parameter to the virtual device and storing the parameter in a preset database;
adding the to-be-configured device to the target account after the to-be-configured device is online, and binding the to-be-configured device added to the target account with the corresponding virtual device; and
reading the parameter of the virtual device bound with the to-be-configured device from the preset database, sending the read parameter to the to-be-configured device, and implementing parameter configuration to the to-be-configured device by utilizing the parameter.

2. The method according to claim 1, wherein adding the virtual device corresponding to the to-be-configured device to the target account, configuring the parameter to the virtual device and storing the parameter in the preset database comprises:
receiving a login request for the target account, and executing a login operation of the target account;
allocating a unique virtual ID to the virtual device corresponding to the to-be-configured device, and adding the virtual ID of the virtual device to the target account which is logged in; and
configuring the parameter to the virtual device, and correspondingly storing a configured parameter and the virtual ID of the virtual device in the preset database.

3. The method according to claim 1 or 2, wherein the parameter configured to the virtual device at least comprises one of:
an IP address, a device subordinate group, a working rule, a working scene and device operation data.

4. The method according to claim 2, wherein adding the to-be-configured device to the target account after the to-be-configured device is online comprises:
allocating a unique identification to the to-be-configured device after the to-be-configured device is online; and
adding the unique identification allocated to the to-be-configured device to the target account.

5. The method according to claim 4, wherein binding the to-be-configured device added to the target account with the corresponding virtual device comprises:
acquiring the unique identification of the to-be-configured device, and establishing a one-to-one corresponding mapping relationship between the unique identification of the to-be-configured device and the virtual ID of the corresponding virtual device in the target account; and
storing the established mapping relationship between the unique identification and the virtual ID in the preset database.

6. The method according to claim 4, wherein the unique identification of the to-be-configured device comprises: an MAC address or a unique ID of the to-be-configured device.

7. The method according to claim 1 or 2, wherein reading the parameter of the virtual device bound with the to-be-configured device from the preset database, sending the read parameter to the to-be-configured device and implementing parameter configuration for the to-be-configured device by utilizing the parameter comprises:
detecting whether the parameter of the virtual device bound with the to-be-configured device exists in the preset database; and
if yes, reading the parameter of the virtual device bound with the to-be-configured device, sending the read parameter to the to-be-configured device, and implementing parameter configuration to the to-be-configured device by utilizing the parameter.

8. An offline configuring apparatus for an intelligent device, comprising:
a configuring module, configured to add a virtual device corresponding to a to-be-configured device to a target account, configure a parameter to the virtual device and store the parameter in a preset database;
a binding module, configured to add the to-be-configured device to the target account after the to-be-configured device is online, and bind the to-be-configured device added to the target account with the corresponding virtual device; and
a sending module, configured to read the parameter of the virtual device bound with the to-be-configured device from the preset database, send the read parameter to the to-be-configured device, and implement parameter configuration to the to-be-configured device by utilizing the parameter.

9. The apparatus according to claim 8, wherein the configuring module further comprises:
a receiving unit, configured to receive a login request for the target account, and execute a login operation of the target account;
an adding unit, configured to allocate a unique virtual ID to the virtual device corresponding to the to-be-configured device, and add the virtual ID of the virtual device to the target account which is logged in; and
a storing unit, configured to configure the parameter to the virtual device, and correspondingly store the configured parameter and the virtual ID of the virtual device in the preset database.

10. The apparatus according to claim 8 or 9, wherein the parameter configured to the virtual device at least comprises one of:
an IP address, a device subordinate group, a working rule, a working scene and device operation data.

11. The apparatus according to claim 9, wherein the binding module is further configured to:
allocate a unique identification to the to-be-configured device after the to-be-configured device is online; and
add the unique identification allocated to the to-be-configured device to the target account.

12. The apparatus according to claim 11, wherein the binding module is further configured to:
acquire the unique identification of the to-be-configured device, and establish a one-to-one corresponding mapping relationship between the unique identification of the to-be-configured device and the virtual ID of the corresponding virtual device in the target account; and
store the established mapping relationship between the unique identification and the virtual ID in the preset database.

13. The apparatus according to claim 11, wherein the unique identification of the to-be-configured device comprises: an MAC address or a unique ID of the to-be-configured device.

14. The apparatus according to claim 8 or 9, wherein the sending module is further configured to:
detect whether the parameter of the virtual device bound with the to-be-configured device exists in the preset database; and
if yes, read the parameter of the virtual device bound with the to-be-configured device, send the read parameter to the to-be-configured device, and implement parameter configuration to the to-be-configured device by utilizing the parameter.
